# EUROPÄISCHE PATENTSCHRIFT

(11) **EP 0 988 111 B1**
(45) Veröffentlichungstag und Bekanntmachung des Hinweises auf die Patenterteilung: **19.03.2003**
(21) Anmeldenummer: 98929391.5
(22) Anmeldetag: 28.05.1998
(51) Int. Cl.: B03B 9/06

(54) **VERFAHREN ZUR WIEDERAUFBEREITUNG VON RESTBETON AUS NICHTVERBRAUCHTEN FRISCHBETONRESTEN SOWIE AUS RÜCKSTÄNDEN BEI DER REINIGUNG VON BETONHERSTELLUNGS- UND -TRANSPORTEINRICHTUNGEN**
METHOD FOR REPROCESSING CONCRETE RESIDUES FROM UNUSED UNSET CONCRETE AND FROM CONCRETE RESIDUES OBTAINED FROM CLEANING DEVICES USED FOR CONCRETE PRODUCTION AND TRANSPORT
PROCEDE POUR LE RECYCLAGE DE BETON RESIDUEL A PARTIR DE RESTES DE BETON FRAIS INUTILISES AINSI QUE DE RESIDUS PROVENANT DU NETTOYAGE DE DISPOSITIFS DE PRODUCTION ET DE TRANSPORT DE BETON

(30) Priorität: 05.06.1997 DE 19723687
(43) Veröffentlichungstag der Anmeldung: 29.03.2000
(73) Patentinhaber: Bozenhardt, Jürgen, 72636 Frickenhausen (DE)
(72) Erfinder: Bozenhardt, Jürgen, 72636 Frickenhausen (DE)
(74) Vertreter: Ludewig, Rita, Dipl.-Ing.
(86) Internationale Anmeldenummer: EP9803150
(87) Internationale Veröffentlichungsnummer: WO98055235

(56) Entgegenhaltungen:
- EP-A- 0 111 014
- EP-A- 0 167 646
- EP-A- 0 652 048
- US-A- 3 997 434

## Beschreibung

Die Erfindung betrifft ein Verfahren zur Wiederaufbereitung von Restbeton aus nicht verbrauchten Frischbetonresten sowie aus Rückständen, die bei der Reinigung von Betonherstellungs- und -transporteinrichtungen wie Fahrmischern, Mischanlagen und Betonpumpen auf Baustellen, in Betonwerken und Wiederaufbereitungsanlagen anfallen.

Bei der Frischbetonherstellung werden durchschnittlich 2,5% der Gesamtproduktionsmengen als Restmengen zur Wiederaufbereitung in die Betonwerke bzw. Wiederaufbereitungsanlagen zurückgeführt. Die Wiederaufbereitung dieser Restmengen ist besonders deshalb problematisch, da das in den Restmengen enthaltene Wasser stark alkalisch und mit einem hohem Anteil an Zement vermischt ist. Eine Einleitung dieses zementhaltigen Wassers in die Kanalisation ist aus Gründen des Umweltschutzes untersagt. Die Folge sind arbeits- und materialaufwendige und somit kostenaufwendige Wiederaufbereitungsverfahren und/oder irreparable Umweltschäden.

Es sind Wiederaufbereitungsverfahren bekannt, bei denen die einzelnen Verfahrensschritte wie das Auswaschen der Festbestandteile aus dem Restbeton unter Zusatz von Spülwasser und deren Klassierung in manuell steuerbaren Anlagen wie beispielsweise geschlossenen Waschtrommeln, Trogvorwäschern, Vibrationssiebgrobtrennern oder schrägstehenden Entwässerungsschnecken mit und ohne Klassiersieb mit nachgeschaltetem Klärteil für die Aufnahme des zementhaltigen Wassers separat ablaufen. Bei diesen Verfahren muß das zementhaltige Wasser in den nachgeschalteten Klärteilen durch Rührwerke bewegt werden, damit es nicht abbindet. Der bei diesen Verfahren anfallende Schlammanteil muß aus den Gruben entfernt und als Sondermüll entsorgt werden.

Das ist kosten- und materialaufwendig und umweltunfreundlich.

Aus der DE 44 03 262 A1 ist auch ein Verfahren zum Mischen von Schmutzwasser in Beton- Wiederaufbereitungsanlagen bekannt, bei dem das Schmutzwasser in einen Behälter gegeben wird, der an seiner Unterseite die Form eines Troges hat und bei dem das Schmutzwasser mit zwei Mischspiralen zur Mitte des Behälters hin oder von dieser weg befördert wird, um ein Vermischen des Schmutzwassers zu erreichen.

Die EP-A-0111014 geht von einem Verfahren zur Trennung und Wiederverwertung aller Restbetonbestandteile aus, bei dem der Restbeton in den Einfülltrichter einer Vorrichtung eingefüllt, dort mit Wasser vermengt durch eine, koaxial in einem schräg aufwärts gerichteten Waschtrog, angeordnete Förderschnecke durchwirbelt und die gröberen Bestandteile , Kies und Grobsand , in dem Waschtrog bis zur Abwurföffnung aufwärts transportiert werden, wobei auf diesem Weg die groben Bestandteile durch über die auf dem Waschtrog angeordneten Sprührohre eingespritztes Wasser gewaschen, und die Grobanteile durch ein unter der Abwurföffnung angebrachtes Separierungssieb mit unterschiedlicher Maschenweite nach den verschiedenen Korngrößen aufgeteilt werden. Das zugrundliegende Verfahren ist dadurch gekennzeichnet, daß die im Wasser vermengten Feinstanteile, die sogenannte Trübe, in ein separates Becken überfließt, wo sie in periodischen Abständen umgerührt wird, ein Teil der Trübe zur Verdünnung des Restbetons wieder in den Einfülltrichter zurückgepumt und ein weiterer Teil zum Ausspülen der Fahrmischertrommeln verwendet wird, während der durch Frischwasserzufuhr sich immer wieder ergänzende Rest der Trübe dem Betonmischer direkt oder über einen Vorratsbehälter zur Beimischung zur Beimischung zu einer neuen Charge zugeführt wird, wobei gleichzeitig die Konsistenz der Trübe gemessen und, falls notwendig, durch Zufuhr von Frischwasser verdünnt wird, und daß die Vorrichtung bei Frost, automatisch gesteuert, in Abständen kurzzeitig in Funktion gesetzt wird. Die Aufgabenstellung strebt ein Verfahren und eine Vorrichtung zur Trennung und Wiederverwendung aller Restbetonbestandteile und des Spülwassers, womit vermutlich die Trübe gemeint ist, an, wobei alle Verfahrensschritte möglichst automatisch gesteuert so erfolgen sollen, daß durch die Rückstände keinerlei Umweltverschmutzung entsteht und die Rentabilität der Anlage angehoben wird. Das hier beschrieben Verfahren läuft jedoch, wie bereits allgemein dargestellt, in einer Anlage ab, die aus separat angeordneten und separat angetriebenen Funktionselementen, wie beispielsweise Einfülltrichter, schrägstehendem Waschtrog mit koaxial angeordneter Förderschnecke, unter der Abwurföffnung angeordnetem Separierungssieb und Becken zur Aufnahme der Trübe, besteht. Auch bei diesem Verfahren muß das zementhaltige Wasser in dem separaten Becken durch Rührwerke in periodischen Abständen bewegt werden, damit es nicht abbindet. Der bei diesen Verfahren im Becken erfahrungsgemäß nach und nach anfallende Schlammanteil muß aus dem Becken entfernt und als Sondermüll entsorgt werden. Die erforderlichen Rührwerke im Becken fordern wiederum einen hohen zusätzlichen Energieaufwand und die Anlage ist schon aus diesem Grund hinsichtlich der Wartung und Reparatur der Anlage kosten- und materialaufwendig. Die vorgestellte Verfahrenslösung ist vorrichtungsbedingt durch ihre zur Umwelt offene Anordnung aller Anlagenteile nicht in der Lage, die angestrebte Aufgabenstellung zumindest hinsichlich ihrer Umweltunfreundlichkeit zu erfüllen.

Die EP-A-0167646 beschreibt eine Restbeton- Aufbereitungsanlage, die aus einem separaten Aufnahmebehälter mit Förderschnecke, einem Verbindungskanal zu einer Wascheinrichtung besteht, aus der mehrere Komponenten wie Sand und Kies durch eine Hochfördereinrichtung ausgetragen und die Feinstbestandteile über eine Schlammwasser-Fördereinrichtung in ein Schlammwasserbecken befördert und dort durch separate Rührwerke in Bewegung gehalten werden und von dem das Schlammwasser in ein Spülwasserbecken geleitet, durch Frischwasser verdünnt und zur Verdünnung von Restbeton, zur Reinigung von Betonmischern etc. dem Arbeitsprozeß wieder zugeführt wird. Die Aufgabe der Erfindung besteht darin, bekannte Anlagen dahingehend zu verbessern, daß größere Restbetonmengen (5m³) kurzfristig im Aufnahmebehälter entleert werden können und das eine vollautomatische Verarbeitung der eingeschütteten Betonmenge mit einer genaueren Regelung derart erfolgt, daß die Wascheinrichtung nicht überladen wird und ein niedrigerer Trennschnitt gewährleistet werden kann. Die Erfindung unterscheidet sich von bisher bekannten durch eine speziell entwickelte automatische Steuerung, die eine Vielzahl angeordneter, und die einzelnen separat arbeitenden Aggregate antreibenden Antriebsmotoren, sich gegenseitig beeinflussend ansteuern und einem diesen Erfordernissen angepaßten Aufnahmebehälter, wodurch die Aufgabenstellung erreicht werden soll. Das in dieser Restbeton-Aufbereitungsanlage ablaufende, an sich bekannte, Verfahren unterscheidet sich nicht von den bisher bekannten, weil die Wiederaufbereitung in einer Vielzahl separat angeordneter Anlagenteile einschließlich einem separaten Schlammwasserbecken abläuft. Die bereits beschriebenen Nachteile, wie hoher Energieaufwand durch eine Vielzahl von Antriebsmotoren für die Wascheinrichtung die Vibrationsrutsche, die Förderschnecke, den Hochförderer, die Rührwerke im Schlammwasserbecken etc., aufwendige Schlammentsorgung aus einem separatem Schlammwasserbecken sowie umweltunfreundlicher Zugang der Restbetonbestandteile zur Umwelt durch die offene und platzaufwendige Unterfluranordnung der einzelnen Anlagenteile, können auch durch diese Lösung nicht beseitigt werden.

Die beschriebenen Verfahren beinhalten alle separat ablaufende Verfahrensschritte in separat angeordneten, räumlich getrennt arbeitenden Maschinen und Anlagen, die durch zusätzliche Transport-, Bauneben- und Entsorgungsarbeiten gekennzeichnet sind. Bedingt durch die unkonventionellen Arbeitsabläufe sowie den häufig unsachgemäßen Umgang mit den Anlagen in den Herstellungs- und Wiederaufbereitungsanlagen führen diese Verfahren zu hohem Verschleiß der Maschinen und Anlagen und haben einen hohen Kosten- und Materialaufwand zur Folge.

Es ist daher Aufgabe der Erfindung ein Verfahren für die Wiederaufbereitung von Restbeton zu finden, daß die Wiederaufbereitung aller Bestandteile des Restbetons einschließlich der zementhaltigen Wasserbestandteile und deren Rückführung in den Herstellungsprozeß, die flexible Anordnung und Aufstellung einer integrierten Wiederaufbereitungsanlage sowie einen von subjektiven Faktoren unabhängigen automatisch gesteuerten Verfahrensablauf der Wiederaufbereitung gestattet und das eine Minimierung des bei den bisherigen Verfahren erforderlichen Energie-, Material- und Kostenaufwandes gewährleistet.

Diese Aufgabe wird durch ein Verfahren zur Wiederaufbereitung von Restbeton mit den kennzeichnenden Merkmalen des Anspruchs 1 gelöst.

Die nicht separierten Verfahrensschritte, die automatisch, elektronisch gesteuert und überwacht in einem integrierten Recyclingsystem nach Anspruch 1 und 2 ablaufen, gestatten einen von subjektiven Faktoren weitestgehend unabhängigen Verfahrensablauf und die Einsparung von Bedienungspersonal für die bisher erforderlichen Einzelschritte der Verfahrensabläufe bei der Wiederaufbereitung. Er ermöglicht die Einsparung von Arbeitsmitteln, Transportwegen und Zeitaufwand für den Transport zwischen den bisher getrennt aufgestellten und manuell zu bedienenden Bearbeitungsanlagen.

Besonders vorteilhaft ist die automatische Verfahrensschrittfolge gemäß Anspruch 2, die neben der Klassierung und Rückführung der Sand- und Kiesbestandteile des Restbetons auch die Rückführung der zementhaltigen Suspension in den Herstellungsprozeß gestattet, wodurch das separieren und ausschwemmen des Zementschlamms und dessen aufwendige und umweltunfreundliche Entsorgung entfällt.

Die gleichzeitige und mit dem Wiederaufbereitungsprozeß automatisch und unabhängig von subjektiven Einflußfaktoren ablaufende Reinigung der Fahrmischertrommeln, Pumpen und Rohrsysteme gewährleisten außerdem eine wesentlich längere Lebensdauer aller Maschinen- und Anlagenteile, Steuerungselemente und Transportmittel sowie hohe Zeiteinsparung bei der bisher manuell vorzunehmenden Reinigung.

Die Zerstörung von Anlagen- und Maschinenteilen durch unsachgemäße Bedienung wie Überfüllung der Aufnahmebecken und Überlastung der Anlagen, ist durch die elektronische Steuerung und Überwachung der Verfahrensschrittfolge nach den Ansprüchen 3 und 4 ausgeschlossen.

Besonders vorteilhaft ist die automatische Umschaltung des Hauptantriebs des Recyclingsystems in Voll- oder Intervallbetrieb nach Anspruch 5, der einerseits das im Aufbereitungsbereich befindliche zementhaltige Wasser in einer gleichmäßigen Suspension erhält und gleichzeitig Energieeinsparungen gewährleistet.

Außerdem gestattet die elektronische Steuerung der Verfahrensschrittfolge eine bedarfsweise und getrennte Rückführung aller wiederaufbereiteten Restbetonbestandteile in den Herstellungsprozeß.

Vorteilhaft ist auch die Füllstandsüberwachung des Aufbereitungsbereiches nach Anspruch 6, die bei Erreichung eines Füllstandsniveaus unter die definierte minimale Höhe eine automatische Wassernachspeisung auslöst.

Schließlich besteht ein erheblicher Vorteil des elektronisch gesteuerten und überwachten Wiederaufbereitungsverfahrens darin, daß seine Benutzung zeitlich und räumlich unabhängig voneinander vom Betonwerk und von anfahrenden Fahrmischerfahrern gewährleistet ist.

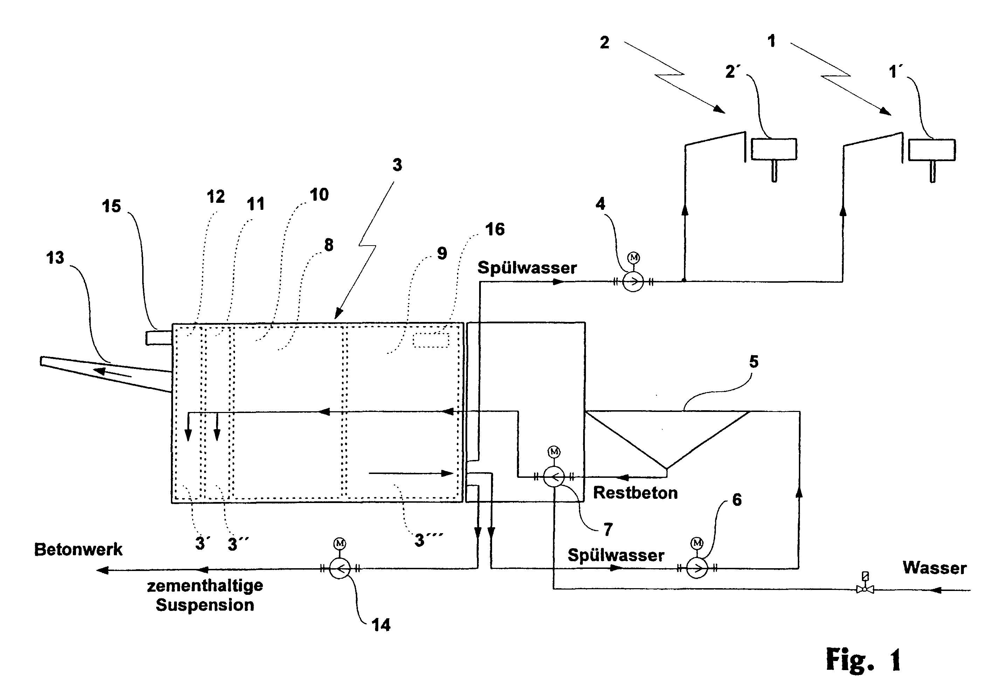

Die Erfindung wird nachstehend anhand eines Beispiels näher beschrieben. Dabei zeigt die Zeichnung
Fig. 1 die schematische Darstellung des Wiederaufbereitungsverfahrens von Restbeton

Bei der Rückführung von Restbeton beispielsweise aus einem Fahrmischer fährt der Fahrmischer an ein Aufgabebecken 5 heran, wobei der Fahrer an dem gewählten Spülgalgen 1 oder 2 durch Betätigung eines Schalters die Zuführuung von Spülwasser über eine Spülwasserpumpe 4, aus einer Kammer 3''' eines Aufbereitungsbereiches 3 in die Trommel des Fahrmischers auslöst, beim Heranfahren des Fahrmischers an das Aufgabebecken 5 wird gleichzeitig über eine Fahrmischererkennung 1' oder 2' ein elektrisches Signal ausgelöst, durch welches Spülwasser über eine Spülwasserpumpe 6 aus der Kammer 3"' des Aufbereitungsbereichs 3 in das Aufgabebecken 5 befördert wird. Der Fahrer entleert den Restbeton aus der Fahrmischertrommel in das Aufgabebecken 5, der durch die Zuführung des Spülwassers über die Spülwasserpumpe 6 verdünnt wird. Mit einer definierten Verzögerung zur Spülwasserpumpe 6 schaltet eine Betonpumpe 7 ein und befördert den verdünnten Restbeton aus dem Augabebecken 5 in den Aufbereitungsbereich 3, wobei immer nur so viel Masse in den Aufbereitungsbereich 3 befördert wird, wie das Recyclingsystem verarbeiten kann. Eine Überlastung des Systems durch Überladung des Aufagbebeckens 5 wird durch die automatische Dosierung der Betonpumpe 7 verhindert. Mit dem Einschalten der Betonpumpe 7 schaltet automatisch ein Hauptantrieb 15 von Intervallbetrieb auf volle Leistung um, wodurch das im Aufbereitungsbereich 3 arbeitende Klassiersystem 8, der Mischrotor 9 und die Förderrotoren 10 kontinuierlich arbeiten. Diese Umschaltung erfolgt jedoch nur dann, wenn der Hauptantrieb 15 nicht bereits im Vollbetrieb arbeitet, weil gerade Zementwasser aus dem Aufbereitungsbereich 3 entnommen wird oder unmittelbar vorher bereits ein Fahrmischer seinen Restbeton in das System entladen hat. Die Festbestandteile des verflüssigten Restbetons werden im Aufbereitungsbereich 3 durch das Klassiersystem 8 in Grob- und Feinbestandteile vorklassiert und grob ausgewaschen, durch Förderrotoren 10 in getrennte Bereiche 3' und 3" des Aufbereitungsbereichs 3 zur Nachauswaschung befördert und durch Becherwerke 11 und 12 aus den getrennten Bereichen 3' und 3" auf eine getrennte Entwässerungsrinne 13 zur Zementendauswaschung befördert.

Wenn der Fahrmischer entleert ist, gibt er beim Wegfahren vom Aufgabebecken 5 den Spülgalgenkontakt 1' oder 2' frei und es startet automatisch eine Nachlaufzeit der Spülwasserpumpe 6, die so lange neu gesetzt wird, bis durch die Leistungsmessung der Betonpumpe 7 die Spülwasserpumpe 6 ausschaltet und zeitverzögert die Betonpumpe 7 zum Stillstand kommt. Mit der Entfernung der Festbestandteile des Restbetons aus dem Aufbereitungsbereich 3 schaltet der Hauptantrieb 15 automatisch wieder in den Intervallbetrieb um, wodurch das zementhaltige Wasser in gleichmäßiger Suspension gehalten und mit einer Zementwasserpumpe 14 auf Abruf vom Betonwerk jederzeit in den Betonherstellungsprozeß zurückgeführt werden kann. Zeitverzögert schaltet ein getrennter Antrieb der Entwässerungsrinne 13 ab. Die Grob- und Feinkornanteile werden ebenfalls auf Abruf in den Betonherstellungsprozeß zurückgeführt. Die Füllstandsüberwachung im Aufbereitungsbereich 3 ist durch einen Sensor 16 erfaß- und regulierbar. Bei Unterschreitung der definierten minimalen Füllhöhe im Aufbereitungsbereich 3 wird diese durch eine automatische Wassernachspeisung reguliert. Das erfindungsgemäße Wiederaufbereitungsverfahren ist durch die elektronische Steuerung und Überwachung sowie durch die automatische Verfahrensschrittfolge in einem integrierten Recyclingsystem derart gesichert, daß das Verfahren weitestgehend unabhängig von subjektiven Einflußfaktoren abläuft und ungeschultes Personal durch Fehlbedienung keinen materiellen und finanziellen Schaden anrichten kann.

### Aufstellung der verwendeten Bezuaszeichen

- 1: Spülgalgen,
- 1': Fahrmischererkennung,
- 2: Spülgalgen,
- 2': Fahrmischererkennung,
- 3: Aufbereitungsbereich,
- 3': Bereich,
- 3'': Bereich,
- 3"': Bereich,
- 4: Spülwasserpumpe,
- 5: Aufgabebecken,
- 6: Spülwasserpumpe,
- 7: Betonpumpe,
- 8: Klassiersystem,
- 9: Mischrotor,
- 10: Förderrotoren,
- 11: Becherwerk,
- 12: Becherwerk,
- 13: geteilte Entwässerungsrinne,
- 14: Zementwasserpumpe,
- 15: Hauptantrieb,
- 16: Sensor

## Patentansprüche

1. Verfahren zur Wiederaufbereitung von Restbeton aus nicht verbrauchten Frischbetonresten sowie aus Rückständen bei der Reinigung von Betonherstellungs- und -transporteinrichtungen, bestehend aus den Verfahrensschritten, Anfahren eines Fahrmischers an einen Spülgalgen, Verdünnung des Restbeton durch Zuführung von Wasser, Einfüllen des Restbetons in ein Aufnahmebecken, Auswaschen der Sand- und/oder Kiesbestandteile aus dem Restbeton, Klassierung und Aufbereitung der Sand- und/oder Kiesbestandteile, Ausschwemmen des Zementschlamms und dessen automatisches Umrühren und Erhaltung einer gleichmäßigen zementhaltigen Suspension sowie getrennte Rückführung der wiederaufbereiteten Restbetonbestanteile in den Herstellungsprozeß, wobei die Konsistenz des Zementschlamms gemessen und falls notwendig durch Zufuhr von Frischwasser verdünnt wird, wobei die Verfahrensschritte ohne Separierung in einem Aufbereitungsbereich (3), über einen Hauptantrieb (15) automatisch, elektronisch gesteuert und überwacht in einem integrierten Recyclingsystem ablaufen.

2. Verfahren zur Wiederaufbereitung von Restbeton nach Anspruch 1, wobei,
- nach dem Anfahren eines Fahrmischers an einen Spülgalgen (1) oder (2), der Zuführung von Spülwasser aus einem Aufbereitungsbereich (3) des integrierten Receyclingsystems in die Fahrmischertrommel, dem Entleeren der Fahrmischertrommel durch Einfüllen des verdünnten Restbetons in ein Aufgabebecken (5), der Zuführung von Spülwasser aus dem Aufbereitungsbereich (3) über eine durch eine Fahrmischererkennung (1') oder (2') ausgelöste Zuführung von Spülwasser in das Aufgabebecken (5) durch eine Spülwasserpumpe (6) und der Beförderung des verdünnten Restbetons über eine Betonpumpe (7) in den Aufbereitungsbereich (3) die weitere Folge der Verfahrensschritte
- Zementauswaschung und serienmäßige Vorklassierung der Festbestandteile mittels eines Klassiersystems (8), die Beförderung der vorklassierten Bestandteile über einen Förderrotor (10) in getrennte Bereiche (3') und (3") des Aufbereitungsbereiches (3), die gleichzeitige kontinuierliche Bewegung des ablaufenden zementhaltigen Wassers zur Erhaltung einer gleichmäßigen Suspension in einem getrennten Bereich (3"') des Aufbereitungsbereiches (3), die Beförderung der Sand- und Kiesbestandteile mit Becherwerken (11) und (12) aus den Bereichen (3') und (3") auf eine getrennte Entwässerungsrinne (13) sowie die Rückführung der zementhaltigen Suspension aus dem Bereich (3"') des Aufbereitungsbereiches (3) über eine Zementwasserpumpe (14) innerhalb des Aufbereitungsbereichs (3) des integrierten Recyclingsystems über einen Hauptantrieb (15) ablaufen,
- die automatische Umschaltung des Hauptantriebs (15) des integrierten Recyclingsystems in Vollbetrieb bei Zugabe von Restbeton oder Entnahme von Zementwasser aus dem Aufbereitungsbereich (3) und in einen Intervallbetrieb bei Erreichung einer definierten Leistungsaufnahme des Hauptantriebs (15) erfolgt und
- die automatische Wassernachspeisung bei Unterschreitung des minimalen Füllstands im Aufbereitungsbereich (3) durch eine über einen Sensor (16) gesteuerte automatische Füllstandsüberwachung erfolgt.

3. Verfahren zur Wiederaufbereitung von Restbeton nach Anspruch 1 und 2, wobei eine elektronische Steuerung und Überwachung der Verfahrensschrittfolge durch ein elektrisches Signal bestimmt ist, welches durch das Anfahren des Fahrmischers an das Aufgabebecken (5) über eine Fahrmischererkennung (1') oder (2') an den Spülgalgen (1) oder (2) auslösbar ist.

4. Verfahren zur Wiederaufbereitung von Restbeton nach Anspruch 3, wobei das elektrische Signal die Spülwasserpumpe (6) sowie mit einer Verzögerung die Betonpumpe (7) und erforderlichenfalls den Hauptantrieb (15) mit dem Klassiersystem (8), den Mischrotor (9) und den Förderrotoren (10) im Aufbereitungsbereich (3) automatisch auf volle Leistung schaltet und nach Entleerung des Fahrmischers und dessen Entfernung vom Aufgabebecken (5) eine Nachlaufzeit der Spülwasserpumpe (6) startet, die von der Leistungsaufnahme der Betonpumpe (7) bestimmt ist.

5. Verfahren zur Wiederaufbereitung von Restbeton nach Anspruch 4, wobei eine Reduzierung der Leistungsaufnahme der Betonpumpe (7) ein Abschalten der Spülwasserpumpe (6) sowie erst nach vollständiger Entleerung des Aufgabebeckens (5) zeitverzögert ein Abschalten der Betonpumpe (7) auslöst und nach Entfernung der Festbestanteile des Restbetons aus dem Aufbereitungsbereich (3) der Hauptantrieb (15) in den Intervallbetrieb übergeht und mit einer Verzögerung die Entwässerungsrinne (13) ausschaltet.

6. Verfahren zur Wiederaufbereitung von Restbeton nach einem der vorhergehenden Ansprüche, wobei im Aufbereitungsbereich (3) bei Reduzierung des Füllstands unter eine definierbare minimale Höhe automatisch ein Ausgleich durch Wassernachspeisung erfolgt.

## Claims

1. Process for recovering residues of non-consumed green concrete as well as of residual concrete particles accumulating within concrete production and transportation equipment, essentially comprising the following processing steps: approach of a mixing truck to a flushing frame, addition of water to dilute the residual concrete, dumping the residual concrete into a feed hopper, elutriation of sand and gravel components from the residual concrete, classification and recycling of the cement sludge, automatic agitation of the latter and maintenance of a uniform, cement-containing mixture as well as separate reintegration of the recycled residual concrete components into the production process, whereby the consistency of the cement sludge is measured, and, if necessary, diluted by addition of make-up water, the individual processing steps being automatically controlled without separation and monitored by electronic means within a processing section (3) via a main driving gear (15) and forming an integrated recycling system.

2. Process for recovering residues of non-consumed green concrete as per claim 1, **characterized in that**
- following the approach of the mixing truck to the flushing frame (1), or, alternatively, (2) the addition of flushing water from a processing section (3) of the integrated recycling system into the rotary drum of the mixing truck, the evacuation of the mixing truck drum by dumping the diluted cement sludge into the feed hopper (5), the addition of flushing water from the processing section (3) into the feed hopper (5) by means of the flushing water pump (6), which is activated by a mixing truck identification device (1') or (2'), and the delivery of the diluted residual concrete into the processing section (3) via a concrete pump (7), and initiation of further processing steps such as
- the elutriation of cement and serial preclassification of solid components by means of a classification system (8), the delivery of the preclassified components into separated section (3') and (3") of the processing section (3) via a conveying rotor (10), the concomitant continuous draining of cement-containing water in order to maintain a uniform suspension within a separated section (3"') of the processing section (3), the delivery of sand and gravel components via bucket conveyors (11) and (12) from the sections (3') and (3") into a separate draining chute (13), as well as the recirculation of the cement-containing suspension from the section (3"') of the processing section (3) via a cement water pump (14) within the processing section (3) of the integrated recycling system via a main driving gear (15),
- automatic change-over of the main driving gear (15) of the integrated recycling system to full-load operation if residual concrete is added or cement-containing water is withdrawn from the processing section (3), or to intermittent operation if a defined power consumption of the main driving gear (15) is reached, and
- starting of the automatic water replenishing system as the minimum filling point in the processing section (3) is signalled by the sensor (16) of the automatic level control device.

3. Process for recovering residues of non-consumed green concrete as per claims 1 and 2, **characterized in that** the electronic control and supervision of processing steps are governed by an electric signal which is triggered, via mixing truck identification devices (1') (2'), as the mixing truck approaches the feed hopper (5) or the flushing frames (1) or (2).

4. Process for recovering residues of non-consumed green concrete as per claim 3, **characterized in that** the electrical signal automatically switches the flushing water pump (6) as well as, with a certain time lag, the concrete pump (7) and, if required, the main driving gear (15) with classification system (8), mixing rotor (9) and conveying rotors (10) in the processing section (3) to full-load output and starts -- following the evacuation and withdrawal of the mixing truck from the feed hopper (5) a tracking cycle of the flushing water pump (6) which latter is governed by the power consumption of the concrete pump (7).

5. Process for recovering residues of non-consumed green concrete as per claim 4, **characterized in that** a drop of the power consumption of the concrete pump (7) causes disconnection of the flushing water pump (6) as well as, after complete evacuation of the feed hopper (5), time-delayed disconnection of the concrete pump (7) and, following removal of the solid components of the residual concrete from the processing section (3), switches the main driving gear (15) to intermittent operation, and, after a time delay, disconnects the draining chute (13).

6. Process for recovering residues of non-consumed green concrete as per the above-mentioned claims, **characterized in that**, upon a reduction of the filling condition in the processing section (3) below a defined minimum level, water will be automatically replenished as required.

## Revendications

1. Procédé de retraitement de béton résiduel composé de restes de béton frais non consommés ainsi que de résidus se présentant lors du nettoyage de dispositifs de production de béton et de transport de béton, comprenant les étapes suivantes de procédé, à savoir approcher un mélangeur roulant d'une potence de rinçage, délayer le béton résiduel en amenant de l'eau, verser le béton résiduel dans un bassin de réception, enlever par lavage les composants de sable et/ou de gravier du béton résiduel, classer et préparer les composants de sable et/ou de gravier, laver la barbotine par un courant d'eau et remuer celle-ci automatiquement et obtenir une suspension homogène contenant du ciment et faire recycler séparément les composants retraités de béton résiduel dans le processus de production, la consistance de la barbotine étant mesurée et, si nécessaire, celle-ci étant délayée en amenant de l'eau fraîche, les étapes de procédé - sans séparation dans une zone de préparation (3) - se déroulant dans un système intégré de recyclage de manière à être commandés et surveillés électroniquement automatiquement par une commande principale (15).

2. Procédé de retraitement de béton résiduel selon la revendication 1, dans lequel
- après avoir approché un mélangeur roulant d'une potence de rinçage (1) ou (2), après avoir amené de l'eau de rinçage d'une zone de préparation (3) du système intégré de recyclage dans le tambour du mélangeur roulant, après avoir vidé le tambour du mélangeur roulant en versant le béton résiduel délayé dans un bassin d'alimentation (5), après avoir amené de l'eau de rinçage de la zone de préparation (3) par une amenée d'eau de rinçage dans le bassin d'alimentation (5), l'amenée étant déclenchée par un dispositif (1') ou (2') de reconnaissance du mélangeur roulant et se faisant au moyen d'une pompe à eau de rinçage (6), et après avoir transporté le béton résiduel délayé par une pompe à béton (7) dans la zone de préparation (3), les autres étapes suivantes de procédé, à savoir
- lavage du ciment et classement préliminaire en série des composants solides au moyen d'un système classeur (8), le transport des composants préclassés par un rotor transporteur (10) dans des zones séparées (3') et (3") de la zone de préparation (3), le mouvement simultané continu de l'eau s'écoulant contenant du ciment afin d'obtenir une suspension homogène dans une zone séparée (3"') de la zone de préparation (3), le transport des composants de sable et de gravier - au moyen de transporteurs à godets (11) et (12) - des zones (3') et (3") sur une rigole séparée d'écoulement d'eau (13) ainsi que le recyclage de la suspension contenant du ciment et provenant de la zone (3"') de la zone de préparation (3) au moyen d'une pompe à eau de ciment (14), se déroulent à l'intérieur de la zone de préparation (3) du système intégré de recyclage par une commande principale (15).
- la commande principale (15) du système intégré de recyclage est commutée automatiquement en fonctionnement intégral pendant que l'on ajoute du béton résiduel ou l'on prélève de l'eau de ciment de la zone de préparation (3), et en un fonctionnement à intervalles lorsqu'une puissance absorbée définie de la commande principale (15) est atteinte, et
- la réalimentation automatique d'eau se fait par une surveillance automatique de niveau commandée par un palpeur (16), lorsqu'on est inférieur au niveau minimal dans la zone de préparation (3).

3. Procédé de retraitement de béton résiduel selon la revendication 1 et 2, dans lequel une commande et une surveillance électroniques de la suite des étapes de procédé sont déterminées par un signal électrique qui, en approchant le mélangeur roulant du bassin d'alimentation (5), peut être déclenché par un dispositif (1') ou (2') de reconnaissance du mélangeur roulant, qui est situé sur les potences de rinçage (1) ou (2).

4. Procédé de retraitement de béton résiduel selon la revendication 3, dans lequel le signal électrique fait passer la pompe à eau de rinçage (6) ainsi que, avec un retard, la pompe à béton (7) et, en cas de besoin, la commande principale (15) avec le système classeur (8), le rotor mélangeur (9) et les rotors transporteurs (10) dans la zone de préparation (3) automatiquement à pleine charge, et démarre, après avoir vidé le mélangeur roulant et après avoir éloigné celui-ci du bassin d'alimentation (5), un temps durant lequel la pompe à eau de rinçage (6) reste en marche, ce temps étant déterminé par la puissance absorbée de la pompe à béton (7).

5. Procédé de retraitement de béton résiduel selon la revendication 4, dans lequel une réduction de la puissance absorbée de la pompe à béton (7) déclenche un arrêt de la pompe à eau de rinçage (6) ainsi que, seulement après avoir vidé complètement le bassin d'alimentation (5), un arrêt de la pompe à béton (7) avec un retard de temps, et dans lequel, après avoir enlevé les composants solides du béton résiduel de la zone de préparation (3), la commande principale (15) passe au fonctionnement à intervalles et arrête avec un retard la rigole d'écoulement d'eau (13).

6. Procédé de retraitement de béton résiduel selon l'une des revendications précédentes, dans la zone de préparation (3) ayant lieu automatiquement une égalisation par réalimentation d'eau lorsque le niveau est réduit de manière à être au-dessous d'une hauteur minimale définissable.
